# EUROPÄISCHE PATENTANMELDUNG

(11) **EP 1 402 991 A2**
(43) Veröffentlichungstag der Anmeldung: **31.03.2004**
(21) Anmeldenummer: 03021537.0
(22) Anmeldetag: 24.09.2003
(51) Int. Cl.: B23Q 1/01, B23Q 1/62, B23Q 39/04

(54) **Werkzeugmaschine mit einem auf zwei Führungen mit insgesamt drei Auflagern verfahrbarem Fahrständer**

(30) Priorität: 26.09.2002 DE 10245058
(71) Anmelder: Kessler, Hans Kurt, 81673 München (DE)
(72) Erfinder: Kessler, Hans Kurt, 81673 München (DE)

(57) **Zusammenfassung**

Gegenstand der Erfindung ist eine programmgesteuerte Werkzeugmaschine zur spanenden Bearbeitung von Werkstücken mit einem Maschinenbett (1), mindestens einem auf dem vorderen Teil (2) des Maschinenbetts in einer Z-Achse motorisch verfahrbaren Werkstücktisch (70), einem an einem rückwärtigen ortsfesten Ständer (3) an einer vorderen unteren und einer hinteren oberen Führung (8, 9) in einer horizontalen X-Achse verfahrbaren Fahrständer ( 15), einem in der vertikalen Y-Achse motorisch verfahrbaren Vertikalschlitten (38), einer an diesem montierten Bearbeitungseinheit (48) mit horizontaler Arbeitsspindel (50) und mit Leitungssträngen (52, 53, 54) für die Energieversorgung der jeweiligen Baueinheiten. Der Fahrständer (15) ist als in etwa dreieckige bzw. tetraederartige Kastenkonstruktion ausgeführt und besitzt eine vordere Stirnwand (30) mit beidseitigen vorspringenden Vertikalführungen (31, 32) für den Vertikalschlitten (38) und zwei nach oben und hinten zulaufende Seitenwände ( 17, 19) auf. Zum Erhalt einer dreipunktartigen Abstützung ist der breite Vorderteil des Fahrständers ( 15) über zwei seitliche Auflager (25, 26) auf der vorderen unteren Führungsschiene (8) und sein schmales Rückteil (22) über nur ein Auflager (23) auf der hinteren oberen Führungsschiene (9) des ortsfesten Ständers (3, 6) abgestützt.

## Beschreibung

Die Erfindung betrifft eine Werkzeugmaschine zur spanenden Werkstückbearbeitung mit einem Maschinenbett, mindestens einem auf dem vorderen Teil des Maschinenbettes in einer horizontalen Koordiatenachse (Z-Achse) motorisch verfahrbaren Werkstücktisch, einem auf einem ortsfesten rückwärtigen Ständer an einer vorderen unteren und einer hinteren oberen Führung in einer zweiten horizontalen Koordinatenachse (X-Achse) motorisch verfahrbaren Fahrständer, einem an der Stirnseite des Fahrständers in einer vertikalen Koordiatenachse (Y-Achse) motorisch verfahrbaren Vertikalschlitten, einer am Vertikalschlitten montierten Bearbeitungseinheit mit mindestens einer horizontalen Abeitsspindel und mit einer Steuereinheit sowie Leitungssträngen für u.a. die Energieversorgung der motorischen Antriebe.

Eine derartige Werkzeugmaschine wird z.B. von der Firma Makino unter der Typbezeichnung A51 hergestellt und ist in der japanischen Schrift 10043975 A beschrieben. Diese bekannte Maschine weist ein schweres durchgehendes Bett aus einem Formbeton auf, dessen vorderer flacher Teil einen in der Z-Achse mittels eines Spindeltriebes auf zwei Führungsschienen verfahrbaren Schlitten als Träger eines Rundtisches trägt. Der rückwärtige Teil des Maschinenbettes ist stufenartig erhöht und weist auf einer ersten Stufe eine vordere untere sowie auf einer hinteren zweiten Stufe eine rückwärtige obere Führungsschiene auf, auf denen ein rahmenförmiger Fahrständer abgestützt und mittels eines Spindeltriebes in der X-Koordinatenachse verfahrbar ist. An den beiden vertikalen Seitenholmen dieses rahmenförmigen Fahrständers sind Führungsschienen befestigt, an denen ein Vertikalschlitten mittels eines Spindeltriebes in der Y-Koordinatenachse verfahrbar ist. Dieser Vertikalschlitten enthält eine zentrale Aufnahmeöffnung, in welcher eine Bearbeitungseinheit, bestehend aus einem Fräskopf mit horizontaler Arbeitsspindel, angeordnet ist. Die Energiezufuhr zur Bearbeitungseinheit erfolgt bei dieser Maschine durch eine langlochförmige Öffnung im rückwärtigen erhöhten Teil des Maschinenbettes, durch welche die Strom-, Steuerund Spülflüssigkeitsleitungen von der Rückseite des Bettes hindurchgeführt werden. Um ausreichend große Fahrstrecken des Vertikalschlittens mit der Spindel zu gewährleisten, muß der innere Freiraum des rahmenförmigen Fahrständers ausreichend groß sein, was zur Folge hat, daß zum Erhalt der notwendigen Steifigkeit des Fahrständers dessen Rahmenteile massiv und damit schwergewichtig ausgeführt sein müssen. Die dadurch erhöhten bewegten Massen benötigen entsprechend groß dimensionierte Antriebe. Nachteilig ist ferner die geringe Höhendifferenz zwischen der vorderen und der rückwärtigen Führung des Fahrständers hinsichtlich der Energieund Medienzufuhr zur Bearbeitungseinheit und auch hinsichtlich der Einleitung der Bearbeitungskräfte von der Arbeitsspindel in den rückwärtigen Teil des Maschinenbetts.

Aus der DE 100 61 934 A ist eine Werkzeugmaschine zur spanenden Werkstückbearbeitung bekannt, die einen formsteifen rückwärtigen Maschinenständer und ein an dessen Vorderseite anschließendes flaches Maschinenbett aufweist, auf welchem ein in Längsführungen mittels Linearantrieben verfahrbarer Werkstückrundtisch angeordnet ist. An der vorderen Stirnwand des Ständers sind drei Führungsschienen vorgesehen, von denen die unterste nach vorne versetzt ist. Diese drei Führungsschienen dienen zur Führung eines in der horizontalen X-Koordinatenachse verfahrbaren Schlittens mit vorderseitigen Vertikalführungen, an denen ein Spindelkopfträger in der vertikalen Y-Achse verfahrbar gehalten ist. Auch bei dieser bekannten Maschine bereitet die Energie- und Flüssigkeitszufuhr zur Arbeitsspindel hinsichtlich der Leitungsführung gewisse Schwierigkeiten.

Schließlich ist aus der EP 0 152 081 ein Bearbeitungszentrum bekannt, das ein ebenes durchgehendes Bett mit einem auf dessen Vorderteil fest montiertem Werkstücktisch und einem auf dessen Hinterteil in Z-Koordinatenrichtung verfahrbaren Schlitten aufweist. Auf diesem Schlitten ist in einer unteren vorderen und in einer hinteren erhöhten Führungsschiene ein Fahrständer in der X-Koordinatenrichtung verfahrbar angeordnet, der in seiner durchgehenden Stirnwand eine langgestreckte vertikale Öffnung mit seitlichen Führungsschienen aufweist, an denen ein Spindelkopfträger für eine Horizontalspindel in der vertikalen Y-Koordinatenachse verfahrbar geführt ist.

In den EP 0 614 724 B1 und JP 4-365 529 A ist ein Werkzeugmaschinentyp beschrieben, der ein vorderes flaches Bett mit darauf in Z-Richtung verfahrbaren Werkstückrundtisch sowie einen ständerartigen ortsfesten Rückteil enthält. An zwei horizontalen Führungen des Rückteils ist ein Schlitten in X-Koordinatenachse verfahrbar gehalten, der Vertikalführungen aufweist und einen Schlittenträger für einen in Y-Koordinatenachse verfahrbaren Vertikalschlitten darstellt. Der den Schlittenträger bildende Horizontalschlitten und auch der rückwärtige Ständer weisen je eine ausreichend große Öffnung auf, die vom rückwärtigen Teil einer Bearbeitungseinheit mit vorderer Arbeitsspindel durchragt wird und ausreichend groß sind, damit die Arbeitsspindel in den Grenzen des Arbeitsraumes kollisionsfrei bewegbar ist.

Aufgabe der Erfindung ist es, eine gattungsgemäße Werkzeugmaschinen zu schaffen, die bei hoher Gesamtsteifigkeit und verminderten Herstellungskosten eine günstigere Energiezufuhr zu den Antrieben der bewegten Bauteile, insbesondere der Arbeitsspindel, ermöglicht.

Diese Aufgabe wird erfindungsgemäß dadurch gelöst, daß der Fahrständer als - in Draufsicht - etwa dreieckige bzw. tetraederartige geschlossene Kastenkonstruktion ausgeführt ist und eine breite vordere Stirnwand mit beidseitigen Vertikalführungen für den Vertikalschlitten sowie zwei schräg nach oben und hinten zulaufende Seitenwände aufweist, wobei zum Erhalt einer dreipunktartigen Abstützung das breite Vorderteil des Fahrständers über zwei seitliche Auflager auf der vorderen unteren Führungsschiene und das schmale Rückteil des Fahrständers über nur ein Auflager auf der hinteren oberen Führungsschiene des rückwärtigen Betteils abgestützt ist.

Durch die geschlossene Kastenbauweise und die tetraederähnliche Form des Fahrständers wird eine hohe Eigensteifigkeit erzielt und zur Abstützung des schmaleren Rückteils des Fahrständers ist nur ein einziges Auflager in Form eines herkömmlichen Führungsschuhs notwendig. Die erhöhte Lage dieser hinteren Abstützung ergibt eine besonders günstige Einleitung der auf die Arbeitsspindel im Betrieb ausgeübten horizontalen Lasten und Bearbeitungskräfte über das hintere Auflager des Fahrständers in den rückwärtigen erhöhten ortsfesten Ständer. Die kippfreie Führung des Fahrständers wird durch die beiden vorderen unteren Auflager sichergestellt. Die geschlossene Kastenkonstruktion des Fahrständers ermöglicht gegenüber rahmen- oder jochförmigen bekannten Ständern eine Gewichtsverminderung bei gleicher oder sogar verbesserter Steifigkeit. Darüber hinaus sind Kastenkonstruktionen kostengünstiger als die notwendigerweise torsionssteifen und damit schwergewichtigen Rahmenkonstruktionen herzustellen.

Eine günstige Einleitung der während eines Bearbeitungsvorganges von der Horizontalspindel aufgenommenen horizontalen Kräfte über den Fahrständer in den rückwärtigen ortsfesten Unterbau wird erreicht, wenn der vertikale Abstand zwischen der unteren vorderen Führungsschiene und der oberen rückwärtigen Führungsschiene für den Fahrständer etwa ein Drittel bis die Hälfte der Höhe des Fahrständers entspricht.

Die etwa tetraederförmige Ausbildung des Fahrständers und dessen Abstützung auf den beiden Führungsschienen bietet die Möglichkeit, im unteren Teil des ortsfesten rückwärtigen Ständers Öffnungen vorzusehen, durch welche Leitungsstränge zur Versorgung der auf dem Bett verfahrbaren Tischkonstruktion geführt werden können.

Zweckmäßig werden als Antriebe für die Tischkonsole, den Fahrständer und den Vertikalschlitten Linearmotoren verwendet. Zweckmäßig ist als Antrieb für die X-Achsenbewegungen des Fahrständers ein einziger Linearmotor vorgesehen, dessen ortsfester Primärteil an der vorderen schrägen Stirnseite des ortsfesten Ständers zwischen den beiden Führungsschienen und dessen Sekundärteil an der ebenfalls schrägen Rückwand des Fahrständers angeordnet sind.

Gemäß einer vorteilhaften Ausgestaltung der Erfindung hat der als hochsteifes Formteil ausgebildete Vertikalschlitten einen rechteckigen Außenrahmen und an seiner durchgehenden Stirnwand Versteifungsrippen, welche den Außenrahmen mit einem Traghalter für das Spindelgehäuse verbinden. Aufgrund der Halterung der Bearbeitungseinheit wird als Antriebsmotor für die horizontale Arbeitsspindel ein im Spindelgehäuse koaxial angeordneter elektrischer Direktantrieb verwendet, so daß die Bearbeitungseinheit nur eine relativ geringe Gesamtlänge hat.

Die erfindungsgemäße Ausbildung des Fahrständers ermöglicht eine besonders günstige Energie- und Flüssigkeitszufuhr zur Bearbeitungseinheit von oben. Zu diesem Zweck kann der Fahrständer von einer Energieführungskette überquert sein, in welcher die Versorgungsleitungen für die Bearbeitungseinheit, beispielsweise für das Antriebsaggregat der Arbeitsspindel, aufgenommen sind.

Gemäß einer vorteilhaften Weiterbildung der Erfindung ist der Werkstücktisch um eine Vertikalachse verdrehbar auf einem Tischschlitten angeordnet, der an einer Seite zwei voneinander beabstandete Auflager und an der anderen Seite nur ein zentrales Auflager aufweist. Mit diesen Auflagern ist der Tischschlitten über zwei seitliche Führungen auf dem Bett verfahrbar abgestützt. Vorteilhaft befindet sich neben der Führungsschiene für die beiden Auflager ein einziger Linearmotor als Antriebsaggregat zum Verfahren des Tischschlittens in der Z-Richtung.

In Weiterbildung der Erfindung kann die Werkzeugmaschine auch zwei Bearbeitungseinheiten mit je einer zueinander parallel ausgerichteten Arbeitsspindel aufweisen, wobei beide Bearbeitungseinheiten über einen gemeinsamen Vertikalschlitten an einem einzigen Fahrständer angeordnet sein können. Eine hinsichtlich der Bearbeitungsmöglichkeiten und auch des Ausgleichs von Positionierfehlern zweckmäßige Variante enthält zwei nebeneinander am ortsfesten Ständer geführte Fahrständer, die je einen Vertikalschlitten und an diesem eine Bearbeitungseinheit mit horizontaler Arbeitsspindel aufweist.

Im Folgenden werden Ausführungsbeispiele der Erfindung anhand der Zeichnung im einzelnen erläutert. Es zeigen:
- Fig. 1: eine erfindungsgemäße Werkzeugmaschine in perspektivischer Seitenansicht;
- Fig. 2: die Werkzeugmaschine nach Fig. 1 in perspektivischer Rückansicht;
- Fig. 3: eine Variante der Werkzeugmaschine nach Fig. 1, 2 in perspektivischer Rück- und Seitenansicht;
- Fig. 4, 5: Ausführungen von in den Maschinen nach Fig. 1 bis 3 einsetzbaren Fahrständern in schräger Vorder- und Rückansicht;
- Fig. 6, 7: zwei Maschinenausführungen mit jeweils zwei Bearbeitungseinheiten in perspektivischer Front/Seitenansicht.

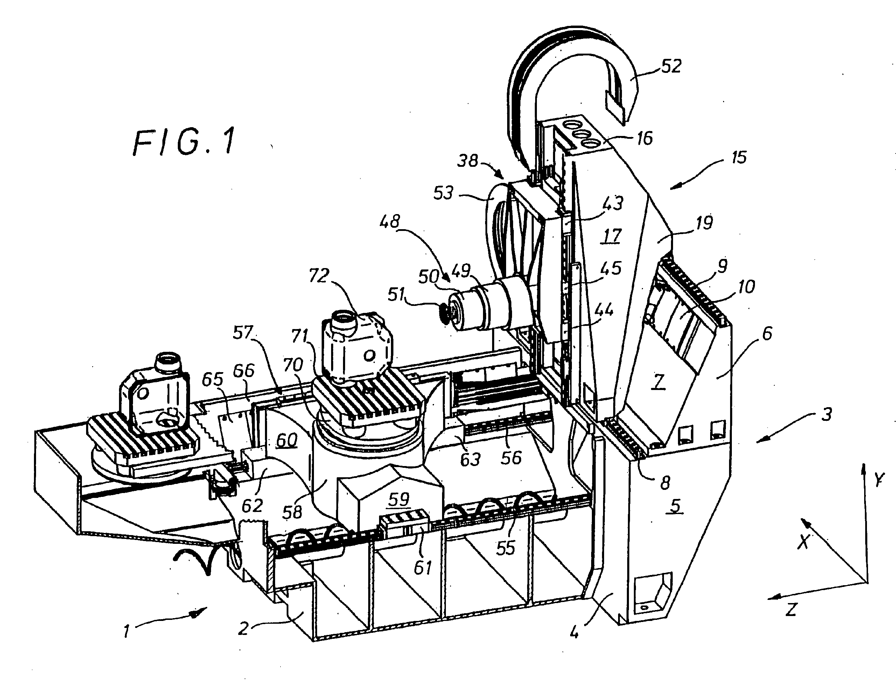

Die in Fig. 1 in schräger Vorderansicht perspektivisch dargestellte Werkzeugmaschine enthält eine Basis 1, bestehend aus einem vorderen als Kastenkonstruktion ausgeführten Bett 2 und einem rückwärtigen ortsfesten Ständer 3, an dessen vertikaler Stirnwand 4 das Bett 2 angeschlossen ist. Bei der Ausführung nach Fig. 1 ist der Ständer 3 zweiteilig ausgebildet und weist ein mit dem Bett 2 fest verbundenes, nach unten verjüngtes Unterteil 5 sowie einen Aufsatz 6 auf, der mit dem Unterteil 5 in einer mittleren Horizontalebene durch z.B. Schrauben fest verbunden ist. Der Oberteil 6 des Ständers 3 hat einen etwa dreieckigen Querschnitt mit vertikaler Rückwand und schräger Stirnwand 7. Auf einem Absatz vor dem Oberteil 6 ist auf dem Unterteil 5 eine untere vordere Führungsschiene 8 montiert, die sich horizontal in der X-Richtung erstreckt. Auf dem schmalen Endabschnitt des Oberteils 6 ist eine zweite obere rückwärtige Führungsschiene 9 angeordnet, die sich parallel zur unteren vorderen Führungsschiene 8 erstreckt. An der schrägen Vorderfläche 7 des oberen Ständerteils 6 sind unterhalb der Führungsschiene 9 Sekundärelemente 10 eines Linearmotors angeordnet.

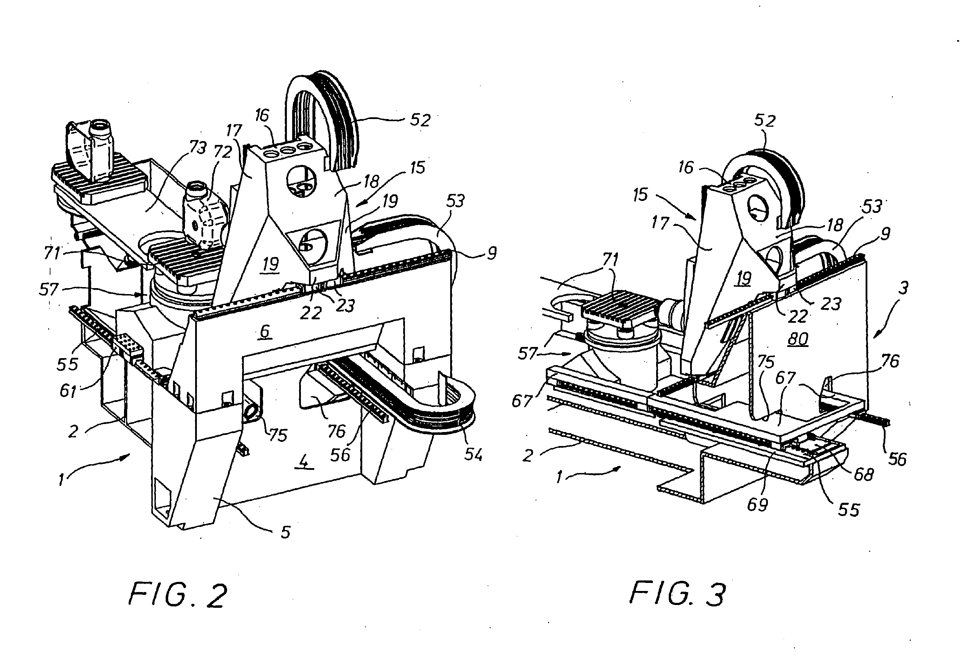

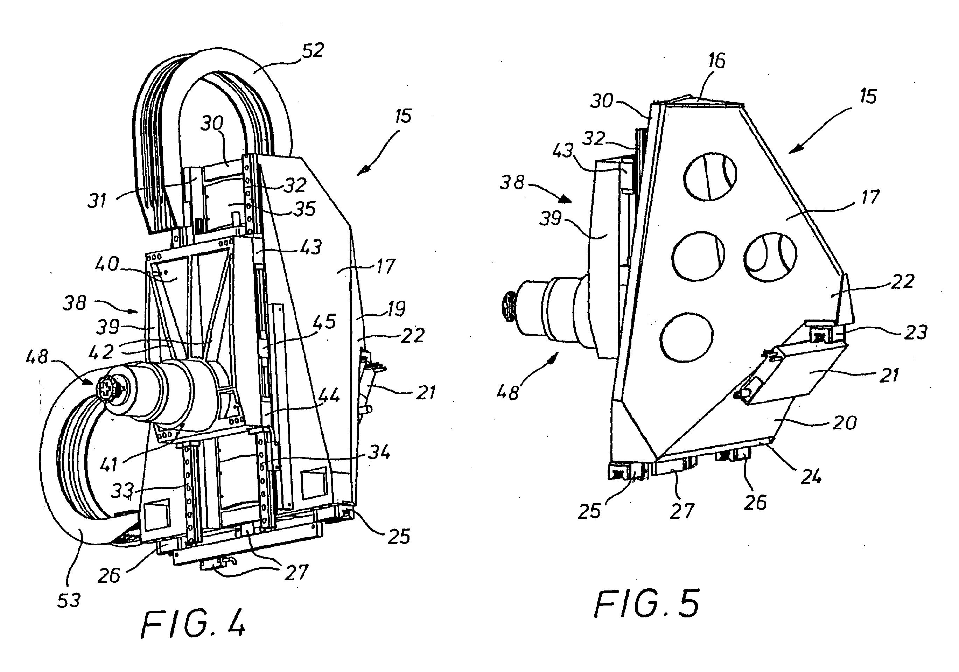

Auf der vorderen unteren Führungsschiene 8 und der oberen hinteren Führungsschiene 9 ist ein Fahrständer 15 in X-Richtung mittels eines Linearmotors verfahrbar, dessen Sekundärelemente 10 am oberen Ständerteil 6 fest montiert sind. Dieser in den Fig. 4, 5 gesondert dargestellte Fahrständer hat eine etwa tetraederartige Form und ist als geschlossene Kastenkonstruktion ausgebildet, was bei vergleichsweise geringem Gewicht eine extrem hohe Steifigkeit ergibt. Der Fahrständer 15 hat eine obere kleinflächige Deckwand 16, die bei der Ausführung nach Fig. 1 rechteckig und bei der Ausführung nach Fig. 4, 5 dreieckig ausgebildet ist. Der Fahrständer 15 weist ferner zwei schräg nach unten außen verlaufende Seitenwände 17 und bei der Ausführung nach Fig. 1 bis 3 eine schräge Rückwand 18 sowie zwei schräge Wandteile 19 auf, welche im oberen Abschnitt die Seitenwände 17 mit der Rückwand 18 und im unteren Abschnitt eine - nur in Fig. 5 dargestellte - schräg nach vorn weisende untere Rückwand 20 verbinden. Diese untere Rückwand 20 verläuft etwa parallel zur vorderen schrägen Wand 7 des oberen Ständerteils 6 und trägt - wie aus Fig. 5 ersichtlich - den Primärteil 21, der zusammen mit dem an der Stirnfläche 7 montierten Sekundärteil 10 den Linearmotor für die Verfahrbewegungen des Fahrständers 15 bildet. Wie insbesondere aus den Fig. 2, 3 und 5 ersichtlich, weist der Fahrständer 15 eine rückwärtige Auskragung 22 auf, die an ihrer ebenen Unterseite ein Auflager in Form von einem oder zwei dicht nebeneinander angeordneten Führungsschuhen 23 trägt. Dieses Auflager 23 ist auf der hinteren oberen Führungsschiene 9 des ortsfesten Ständers 6 abgestützt. An einer schmalen Bodenplatte 24 des Fahrständers 15 sind zwei endseitige Auflager 25, 26 montiert, über die sich der Fahrständer 15 auf der unteren vorderen Führungsschiene 8 des Ständers 3 abstützt. Zwischen den beiden als leichtgängige Führungsschuhe, z.B. Rollenumlaufschuhe, ausgebildeten Auflagern 25, 26 ist an der Bodenplatte 24 ein Längenmeßkopf 27 angeordnet.

An der vorderen vertikalen Stirnwand 30 des Fahrständers 15 sind beidseitig zwei vertikale formsteife Träger 31, 32 ausgebildet, die sich über die gesamte Höhe des Fahrständers 15 erstrecken und stirnseitig je eine Führungsschiene 33, 34 tragen. In dem Zwischenraum zwischen den beiden nach vorn vorspringenden balkenförmigen Trägern 31, 32 sind an der Stirnwand 30 des Fahrständers 15 Sekundärelemente 35 eines Linearmotors angeordnet.

An den beiden vertikalen Führungsschienen 33, 34 ist ein in Draufsicht rechteckiger kastenförmiger Vertikalschlitten 38 in der Y-Richtung mittels eines Linearmotors verfahrbar angeordnet, wobei die Primärelemente dieses Linearmotors an der Rückseite des Vertikalschlittens 38 befestigt sind und mit den an der Stirnwand 30 des Fahrständers 15 zwischen den Trägern 31, 32 montierten Sekundärelementen 35 zusammenwirken. Der Vertikalschlitten 38 hat eine hochsteife Kastenkonstruktion und weist einen äußeren Rechteckrahmen 39, eine durchgehende Stirnwand 40, eine hohlzylindrische Halterung 41 sowie vorspringende Versteifungsrippen 42 auf, welche den äußeren Rahmen 39 mit der hohlzylindrischen Halterung 41 einstückig verbinden. Der Vertikalschlitten 38 trägt an jeder Ecke einen Führungsschuh 43, 44 und an einer Seite einen Wegmeßsensor 45 (siehe Fig. 4).

In der hohlzylindrischen Aufnahmehalterung 41 des Vertikalschlittens 38 ist eine horizontale Bearbeitungseinheit 48 angeordnet, die ein in der Traghalterung 41 fixiertes Spindelgehäuse 49 und eine darin gelagerte horizontale Arbeitsspindel 50 mit eingespanntem Werkzeug 51 aufweist. Verwendung findet hier eine sogenannte Kurzspindel mit einem im Spindelgehäuse 49 koaxial zur Arbeitsspindel 50 angeordneten elektrischen Direktantrieb, der zweckmäßig ein Synchronmotor ist.

Oberhalb des Fahrständers 15 ist ein Kabelführungskanal 52 angeordnet, welcher den Fahrständer 15 bogenförmig überquert und zur geordneten Aufnahme der verschiedenen Kabel und Leitungen zur Versorgung der Bearbeitungseinheit 48 dient. Ein gleichartiger bogenförmiger Kabelkanal 53 ist seitlich am Fahrständer 15 angeordnet.

Auf dem an der Frontseite des ortsfesten Ständers 3 befindlichen Bett 2 sind zwei horizontale Führungsschienen 55, 56 montiert, auf denen ein Tischschlitten 57 in der Z-Richtung mittels eines elektrischen Linearmotors verfahrbar ist. Der Tischschlitten 57 hat einen zylindrischen Mittelteil 58, an dem zur einen Seite ein schmaler Tragansatz 59 und an der anderen Seite ein sich bogenförmig verbreiternder Tragansatz 60 angeformt sind. Der schmalere Tragansatz 59 trägt einen Führungsschuh 61, der auf der einen Führungsschiene 55 läuft. An dem verbreiterten anderen Tragansatz 60 sind zwei endseitige Führungsschuhe 62, 63 angeordnet, die auf der anderen Führungsschiene 56 der rahmenförmige Bettkonstruktion 2 laufen. Der Tischschlitten 57 wird von einem Linearmotor in der Z-Richtung bewegt, dessen Sekundärelemente 65 an einer seitlichen Tragwand 66 des Bettes 2 befestigt sind und dessen Primärelemente an der Seitenwand des verbreiterten Schlittenteils 60 montiert sind. Bei der dargestellten Ausführung ist auf der Tischkonsole 57 ein drehangetriebener Rundtisch 70 angeordnet, auf dem eine Palette 71 mit aufgespanntem Werkstück 72 befestigt ist. Das Wechseln der Werkstücke 72 kann mittels eines schematisch dargestellten Palettenwechslers 73 erfolgen.

In der Rückwand 4 des Bettes 1 bzw. in der vorderen Stirnwand des ortsfesten Ständers 3 sind Öffnungen 75, 76 ausgebildet, durch welche unter anderem ein Kabelkanal 54 (Fig. 2) bzw. die Versorgungskabel von der Maschinenrückseite her zum Tischschlitten 60 hindurchgeführt sind.

Das in Fig. 3 dargestellte Ausführungsbeispiel entspricht weitgehend dem Ausführungsbeispiel nach Fig. 1, 2. Unterschiedlich ist eine andere Konstruktion des ortsfesten Ständers 3, der hier eine durchgehende vertikale Rückwand 80 aufweist und mit dem Bett als einteilige Kastenkonstruktion ausgebildet ist. Ferner ist hier die Tischkonsole 52 an zwei seitlichen Längsholmen eines horizontalen Rahmens 67 befestigt, die über Führungsschuhe auf den Führungsschienen abgestützt sind. Für die Fahrbewegungen der Tischkonsole 57 in der Z-Richtung dient ein aus dem Spänefallbereich unter dem Arbeitsraum nach rückwärts versetzter Linearmotor, dessen ortsfeste Sekundärelemente 68 im Bereich des ortsfesten Ständers 3 an einem horizontalen Tragteil des Betts 2 bzw. des ortsfesten Ständers 3 neben der Führungsschiene 55 montiert sind. Wie dargestellt, sind die Längsholme des Rahmens 67 und die Führungsschienen 55, 56 durch Öffnungen 75, 76 in der Rückwand 80 hindurchgeführt. Diese Konstruktion wird durch die hohe Lage der oberen rückwärtigen Führung 9, 22 des Fahrständers 15 ermöglicht.

Der in Fig. 5 dargestellte Fahrständer unterschiedet sich von der Ausführung nach den Fig. 1 bis 4 durch konstruktive Einzelheiten, wie z.B. die durchgehende Ausbildung der Seitenwände 17, die zur Gewichtseinsparung mit Durchbrüchen versehen sind. Wie der Fahrständer nach Fig. 1 bis 4 sind auch bei dem Fahrständer nach Fig. 5 das als Führungsschuh 23 ausgebildete obere Auflager von den beiden unteren Führungsschuhen 25, 26 in einem vertikalen Abstand angeordnet, der bei dieser Ausführung etwa der halben Höhe des Fahrständers entspricht. Da die Bearbeitungseinheit 48 im unteren Drittel des Vertikalschlittens angeordnet ist, ergibt sich durch einen solchen Höhenabstand der Auflager 23 gegenüber den Auflagern 24, 25 eine besonders günstige Einleitung der im Betrieb auf die Arbeitsspindel einwirkenden Axiallasten über den Fahrständer 15 in den ortsfesten Ständer 3, und zwar weitgehend unabhängig von der jeweiligen Höhenstellung des Vertikalschlittens 38.

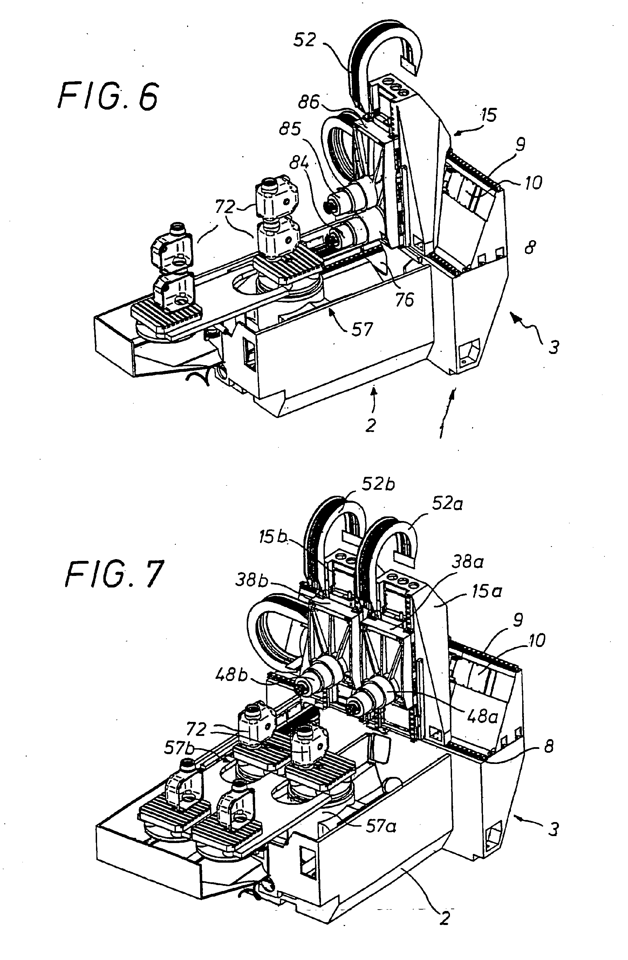

Die in den Fig. 6 und 7 dargestellten Werkzeugmaschinen entsprechen in ihrem konstruktiven Aufbau und auch in ihrer Funktionsweise den vorbeschriebenen Maschinenausführungen. Allerdings weist die Werkzeugmaschine nach Fig. 6 zwei horizontale Bearbeitungseinheiten 84, 85 auf, die übereinander in einem gemeinsamen Vertikalschlitten 86 montiert sind. Diese Maschine ermöglicht die gleichzeitige Bearbeitung von zwei übereinander angeordneten Werkstücken 72.

Die Ausführung nach Fig. 7 enthält zwei gesonderte Fahrständer gemäß z.B. Fig. 4, die nebeneinander auf den Führungsschienen des Ständers 3 angeordnet sind. Wie bei der Ausführung nach Fig. 1, 2 befinden sich unmittelbar unterhalb der oberen Führungsschiene 9 die Sekundärelemente 10 eines Linearmotors. Jeder Fahrständer 15a, 15b verfügt über einen an seiner Rückwand den Sekundärelementen 10 zugekehrten primären Motorteil, so daß beide Fahrständer 15a, 15b in der X-Richtung mittels eines eigenen Linearmotors auf den Führungsschienen 8, 9 fahren können. Ferner weist jeder Fahrständer 15a, 15b einen mit eigenem Antrieb versehenen Vertikalschlitten 38a, 38b sowie eine Bearbeitungseinheit 48a, 48b im jeweiligen Schlitten auf, die entsprechend Fig. 1 bis 5 ausgebildet sind. Auf dem Maschinenbett sind jeweils zwei unabhängig bewegbare Werkstücktische 57a, 57b nebeneinander angeordnet, deren Funktion und Ausbildung der Ausbildung nach Fig. 1 entspricht, wobei jeder Werkstücktisch 57a, 57b über einen eigenen Antrieb, vorteilhaft einen Linearmotor, verfügt.

Die besonderen Vorzüge der erfindungsgemäßen Werkzeugmaschine liegen u.a. in dem geringen Gewicht des Fahrständers und seiner gegenüber bekannten Konstruktionen um ein vielfaches erhöhten Steifigkeit aufgrund seiner tetraederartigen Form und seiner Kastenbauweise. Ein weiterer wesentlicher Vorzug ist die Möglichkeit der Verwendung nur eines einzigen Linearmotors pro Koordinatenachse, was gegenüber bekannten Antriebssystemen insbesondere für die relativ schwergewichtigen Fahrständer mit regelmäßig zwei Linearmotoren zu erheblich verminderten Herstellungskosten führt. Darüber hinaus vereinfacht sich die gesamte Steuerung der Antriebsaggregate, da der für den exakten Synchronlauf der beiden Linearmotoren notwendige Steueraufwand entfällt. Vorteilhaft ist weiterhin die bei dem erfindungsgemäßen Fahrständer und auch bei dem Tischschlitten verwirklichte Dreipunkt-Abstützung, durch die Klemmungen in den Auflagern bzw. Führungen dieser bewegten Teile vermieden werden, wie sie bei entsprechender Vierpunkt-Abstützung aufgrund von mechanischen oder thermischen Einflüssen auftreten können. Dabei ist es von Vorteil, wenn der Linearmotor an der Seite der beiden voneinander beabstandeten Auflager angeordnet wird, da die Wirkachse der vom Motor erzeugten Vorschubkräfte nur in einem relativ geringen Querabstand zu der Wirkachse der beiden Auflager liegt.

Die Erfindung ist nicht auf die dargestellten und vorstehend beschriebenen Ausführungsbeispiele beschränkt, sondern umfaßt auch verschiedene Varianten. So können einige oder auch alle der in den vorstehend beschriebenen Ausführungsbeispielen verwendeten Linearmotoren durch andere Linearantriebe, wie z.B. Kugelumlaufspindeln, Druckmittelzylinder od. dgl., ersetzt werden. Daneben ist es auch möglich, herkömmliche Tischkonstruktionen mit Vierpunkt-Abstützung zu verwenden. Der Fahrständer in seiner tetraederartigen Form kann aus beliebigen Materialien in jeweils geeigneter Weise hergestellt sein, beispielsweise als Schweißkonstruktion, als ein- oder mehrteilig hergestelltes Gußteil usw.

Statt der vorstehend beschriebenen und dargestellten Bearbeitungseinheiten mit horizontaler Arbeitsspindel können auch andere Bearbeitungseinheiten mit vertikalem oder verschwenkbarem Fräskopf verwendet werden. Zweckmäßigerweise wird eine solche Bearbeitungseinheit in senkrechter Achsausrichtung am Vertikalschlitten 38 montiert, der dann konsolenartig ausgebildet ist und zusätzlich Bauteile zum Verschwenken des Fräskopfes um eine horizontale oder 45°-Achse enthalten kann. Die jeweilige Bearbeitungseinheit mit vertikalem Fräskopf kann auch direkt an der dann entsprechend umgestalteten Stirnwand des Fahrständers - unter Wegfall des Vertikalschlittens - montiert sein, wobei dann die Vertikalbewegungen der Arbeitsspindel im Fräskopf z.B. mittels einer Pinole erzeugt werden.

Die erfindungsgemäße Werkzeugmaschine eignet sich nach ihrem technischen Konzept insbesondere für die Großserienfertigung mit einer Vielzahl von kurzen oder längeren Bearbeitungszyklen, schnellen automatisierten Wechseln der Werkstücke und der Werkzeuge, wobei die Span-zu-Span-Zeiten im Bereich weniger Sekunden liegen.

## Patentansprüche

1. Programmgesteuerte Werkzeugmaschine zur spanenden Bearbeitung mit
- einem Maschinenbett (2),
- mindestens einem auf dem vorderen Teil des Maschinenbetts (2) in einer horizontalen Koordinatenachse (Z) motorisch verfahrbaren Werkstücktisch (57),
- einem an einem rückwärtigen ortsfesten Ständer (3) an einer vorderen unteren und einer hinteren oberen Führung (8; 9) in einer zweiten horizontalen Koordinatenachse (X) motorisch verfahrbaren Fahrständer (15),
- einem an der Stirnseite des Fahrständers (15) in Führungen (31, 32) in der vertikalen Koordinatenachse (Y) motorisch verfahrbaren Vertikalschlitten (38),
- mindestens einer am Vertikalschlitten (38) montierten Bearbeitungseinheit mit einer Arbeitsspindel (50) und
- Leitungssträngen für u.a. die Energieversorgung der bewegbaren Konstruktionsteile,
**dadurch gekennzeichnet, daß**
- der Fahrständer (15) als in etwa dreieckige tetraederartige Kastenkonstruktion ausgeführt ist und eine breite vordere Stirnwand (30) mit beidseitigen Vertikalführungen (31, 32) für den Vertikalschlitten und mindestens zwei schräg nach oben und hinten zulaufende Seitenwände (17) aufweist und
- der Fahrständer (15) zum Erhalt einer dreipunktartigen Abstützung mit seinem breiten Vorderteil über zwei seitliche Auflager (25, 26) auf der vorderen unteren Führungsschiene (8) und mit seinem schmalen Rückteil (22) über nur ein Auflager (23) auf der hinteren oberen Führungsschiene (9) des ortsfesten Ständers (3) abgestützt ist.

2. Werkzeugmaschine nach Anspruch 1,
**dadurch gekennzeichnet, daß**
der vertikale Abstand zwischen den beiden vorderen und dem einzigen hinteren Auflagern (25, 26; 23) mindestens ein Drittel der Höhe des Fahrständers (15) entspricht.

3. Werkzeugmaschine nach Anspruch 1 oder 2,
**dadurch gekennzeichnet, daß**
im stationären Ständer (3) mindestens eine Durchgangsöffnung (75, 76) zur Durchführung von u.a. Leitungssträngen (54) ausgebildet ist.

4. Werkzeugmaschine nach einem der vorstehenden Ansprüche,
**dadurch gekennzeichnet, daß**
als Antriebe Linearmotoren vorgesehen sind.

5. Werkzeugmaschine nach einem der vorstehenden Ansprüche,
**dadurch gekennzeichnet, daß**
der ein- oder mehrteilige ortsfeste Ständer (3; 5, 6) zwischen der oberen und unteren Führungsschiene (8; 9) eine schräge Stirnwand (7) enthält, an der die Statorelemente (10) des Linearmotors des Fahrständers (15) befestigt sind.

6. Werkzeugmaschine nach einem der vorstehenden Ansprüche,
**dadurch gekennzeichnet, daß**
das ein den Werkstücktisch (70) tragender Tischschlitten (58) an einer Seite über zwei Auflager (62, 63) an einer seitlichen Führung (56) des Bettes und mit seiner anderen Seite über nur ein Auflager (61) auf der zweiten seitlichen Führung (55) des Bettes (2) abgestützt ist, wobei die Sekundärelemente (65) seines Linearmotors seitlich neben der Zweifach-Abstützung (62, 63) angeordnet sind.

7. Werkzeugmaschine nach einem der vorstehenden Ansprüche,
**dadurch gekennzeichnet, daß**
ein Tischschlitten (57) mit einem auf den beiden Führungen (55, 56) des Bettes (2) abgestützen Rahmen (67) fest verbunden ist, dessen Längsholme Öffnungen (75, 76) im ortsfesten Ständer (3) durchragen und dem ein außerhalb des Arbeitsraumes geschützt angeordneter Linearmotor (68) zugeordnet ist.

8. Werkzeugmaschine nach einem der vorstehenden Ansprüche,
**dadurch gekennzeichnet, daß**
das Gehäuse (49) der Arbeitsspindel (50) in Z-Ausrichtung in der versteiften Stirnwand des Vertikalschlittens (38) fest montiert ist und die Arbeitsspindel einen im Spindelgehäuse (49) koaxial angeordneten elektrischen Direktantrieb mit Synchronmotor enthält.

9. Werkzeugmaschine nach einem der vorstehenden Ansprüche,
**dadurch gekennzeichnet, daß**
der als hochsteifes Formteil ausgebildete Vertikalschlitten (38) einen rechteckigen Außenrahmen (39) und an seiner durchgehenden Stirnwand (40) Versteifungsrippen (42) aufweist, welche den Außenrahmen (39) mit einem hohlzylindrischen Traghalter (49) für das Spindelgehäuse verbinden.

10. Werkzeugmaschine nach einem der vorstehenden Ansprüche,
**dadurch gekennzeichnet, daß**
eine Energieführungskette (52) den Fahrständer (15) überquert, in welcher die Versorgungsleitungen für die Bearbeitungseinheit (48) aufgenommen sind.

11. Werkzeugmaschine nach einem der vorstehenden Ansprüche,
**dadurch gekennzeichnet, daß**
das Antriebsaggregat für den Vertikalschlitten (38) an der Vorderwand (30) des Fahrständers (15) zwischen den beiden vorstehenden Führungsschienen (31, 32) für den Vertikalschlitten angeordnet ist.

12. Werkzeugmaschine nach Anspruch 11,
**dadurch gekennzeichnet, daß**
das Antriebsaggregat des Vertikalschlittens (38) ein Linearmotor ist, dessen stationäre Sekundärelemente an der Vorderwand (30) zwischen den beiden vorspringenden Führungsschienen (31, 32) angeordnet sind.

13. Werkzeugmaschine nach einem der vorstehenden Ansprüche,
**dadurch gekennzeichnet, daß**
an dem Vertikalschlitten (86) zwei Bearbeitungseinheiten (84, 85) vorgesehen sind.

14. Werkzeugmaschine nach einem der Ansprüche 1 bis 12,
**dadurch gekennzeichnet, daß**
an dem ortsfesten Ständer (3) zwei gesonderte komplette Fahrständer (15a, 15b) nebeneinander auf den Führungen (8, 9) angeordnet sind, die je eine gesondert ansteuerbare Bearbeitungseinheit (48a, 48b) aufweisen, wobei auch auf dem Bett (2) zwei gesonderte Tischkonstruktionen (57a, 57b) nebeneinander vorgesehen sind.

15. Werkzeugmaschine nach einem der vorstehenden Ansprüche,
**dadurch gekennzeichnet, daß**
die jeweilige Bearbeitungseinheit (48, 48a, 48b) horizontal ausgerichtet ist und mindestens eine horizontale Arbeitsspindel (50) aufweist.

16. Werkzeugmaschine nach einem der Ansprüche 1 bis 14,
**dadurch gekennzeichnet, daß**
die jeweilige Bearbeitungseinheit vertikal ausgerichtet ist und mindestens eine vertikale Arbeitsspindel aufweist.

17. Werkzeugmaschine nach Anspruch 16,
**dadurch gekennzeichnet, daß**
die jeweilige Bearbeitungseinheit direkt an der vorderen Stirnseite des Fahrständers (15) befestigt ist und die Arbeitsspindel im Spindelgehäuse motorisch in der vertikalen Y-Richtung verfahrbar ist.

18. Werkzeugmaschine nach einem der vorstehenden Ansprüche,
**dadurch gekennzeichnet, daß**
die jeweilige Bearbeitungseinheit in den als Konsole ausgebildeten Vertikalschlitten integriert ist.
